# FASCICULE DE BREVET EUROPEEN

(11) **EP 3 313 680 B1**
(45) Date de publication et mention de la délivrance du brevet: **15.01.2020**
(21) Numéro de dépôt: 16747820.5
(22) Date de dépôt: 28.06.2016
(51) Int. Cl.: B60J 5/10, B60Q 1/30, B60R 13/02

(54) **HAYON DE VEHICULE AUTOMOBILE COMPRENANT UN CAISSON EN MATIERE PLASTIQUE**
KRAFTFAHRZEUGHECKKLAPPE MIT EINER KUNSTSTOFFKASTENSTRUKTUR
MOTOR VEHICLE TAILGATE COMPRISING A PLASTIC BOX STRUCTURE

(30) Priorité: 29.06.2015 FR 1556021
(43) Date de publication de la demande: 02.05.2018
(73) Titulaire: Compagnie Plastic Omnium, 69007 Lyon (FR)
(72) Inventeur: LETERRIER, Franck, 01150 Lagnieu (FR); KHAYAT, Issam, 69001 Lyon (FR); STRUSS, Martin, 84103 Bratislava (SK)
(74) Mandataire: LLR
(86) Numéro de dépôt international: PCT/FR2016/051607
(87) Numéro de publication internationale: WO 2017/001772

(56) Documents cités:
- EP-A1- 1 234 752
- WO-A1-02/057102
- DE-U1- 29 924 008
- FR-A1- 2 672 017

## Description

La présente invention concerne un hayon de véhicule automobile comprenant un caisson en matière plastique comprenant au moins un élément structurel de support d'une lunette arrière.

Il est connu de réaliser des éléments structurels de hayon en tôle, par exemple des montants latéraux entourant la lunette arrière, ou encore une traverse horizontale inférieure disposée en partie inférieure de la lunette arrière. Un tel élément structurel en tôle se présente généralement sous la forme d'un corps creux allongé avec une section transversale fermée, afin d'assurer la rigidité du hayon et de permettre l'agencement d'une piste de collage de la lunette arrière qui est rapportée sur l'élément structurel. Un tel hayon est divulgué dans le document DE 299 24 008 U1. est également possible de réaliser des éléments structurels en matière plastique, ne nécessitant pas une section fermée et présentant par exemple une profondeur plus importante et une rigidité équivalente. Dans ce cas, la section de l'élément structurel peut être en forme de U avec une ouverture tournée vers l'extérieur du véhicule et par la suite fermée par la lunette du hayon. Dans ces deux types d'éléments structurels, l'espace délimité par l'élément structurel et éventuellement la lunette est un espace fermé inaccessible.

La présente invention vise à proposer un hayon agencé de façon plus optimale et ainsi limiter les coûts de fabrication de l'arrière du véhicule.

A cet effet, l'invention a pour objet un hayon de véhicule automobile comprenant un caisson en matière plastique comprenant au moins un élément structurel de support d'une lunette arrière, l'élément structurel étant allongé selon une direction dite longitudinale, dans lequel l'élément structurel délimite, avec la lunette arrière, un logement comportant une ouverture intérieure, l'ouverture intérieure étant fermée au moyen d'une garniture rapportée de façon à former au moins partiellement une paroi longitudinale du logement, adjacente à la lunette arrière et disposée vers l'intérieur de la lunette arrière, de sorte que le logement reçoive un élément électrique du véhicule.

Ainsi, on propose d'utiliser une partie du véhicule traditionnellement non accessible après assemblage, et donc non utilisée, pour y associer de nouvelles fonctions du véhicule, à savoir le logement de fonctions électriques. En effet, les inventeurs ont découvert que, lors de l'utilisation d'éléments structurels en matière plastique, la paroi intérieure longitudinale de l'élément structurel disposée vers l'intérieur de la lunette arrière, ou deuxième branche du U, n'est pas indispensable en totalité pour assurer la fonction de rigidité du montant et peut être remplacée par une garniture. Une telle garniture n'a plus besoin de remplir une fonction de rigidité et peut remplir avantageusement une fonction de fermeture d'une zone sèche, permettant de loger un élément électrique. On a ainsi une solution facile d'intégration d'éléments électriques dans la forme en creux de l'élément structurel de hayon, qui s'ajoute à une fonction de décoration assurée par la garniture, permettant notamment de masquer l'intérieur de l'élément structurel. On comprend que l'ouverture intérieure est de préférence fermée de façon étanche au moyen de la garniture.

Par ailleurs, et de façon particulièrement avantageuse, on fournit ainsi un hayon qui peut facilement intégrer des éléments optiques arrière, notamment des feux stop, de recul, des clignotants, alors que les optiques arrières sont traditionnellement ménagées directement sur le véhicule, par exemple en partie inférieure, sur la caisse dans les zone latérales ou encore dans des déflecteurs d'air, également désignés becquets, placés dans le prolongement du toit ou de parties latérales de l'arrière. Ainsi en prévoyant les feux arrière sur le hayon plutôt que sur le reste du véhicule, d'une part on peut proposer de nouvelles configurations esthétiques pour le hayon et le reste du véhicule, d'autre part l'arrière du véhicule est moins contraint par la présence d'éléments optiques, par exemple il n'est pas nécessaire de prévoir des déflecteurs étanches.

On entend par « caisson en matière plastique » un caisson comprenant, non exclusivement, de la matière plastique. On comprend que cette expression inclut notamment un caisson comprenant un matériau composite. On entend par « élément électrique du véhicule » tout organe délivrant, recevant, voire faisant passer de l'énergie électrique, par exemple et non exclusivement un élément optique, une caméra, un capteur, un récepteur, un émetteur, une antenne ou un fil électrique. Ainsi l'élément électrique peut présenter une grande variété de fonctions, telle que la fonction température, la fonction pluie, la fonction anti-pincement, la fonction radar, la fonction feu de signalisation, ou encore la fonction éclairage de style, et également utiliser une grande variété de technologie, telles que l'infra-rouge, les ondes radio, le capteur capacitif, etc. On comprend que « l'ouverture intérieure » est une ouverture réalisée dans une paroi longitudinale du logement adjacente à la lunette arrière et disposée vers l'intérieur de la lunette arrière, c'est-à-dire qui se trouve plus proche du centre de la lunette arrière qu'une paroi longitudinale opposée, qui elle est considérée comme une paroi longitudinale extérieure du logement. En d'autres termes, le côté intérieur est orienté vers le centre de la lunette arrière et le côté extérieur est orienté dans la direction opposée. Une paroi longitudinale est entendue en référence à la forme allongée de l'élément structurel, la direction de l'allongement définissant la direction longitudinale. On comprend que la paroi longitudinale intérieure est une paroi qui est adjacente à la lunette arrière, souvent sensiblement perpendiculaire à la lunette arrière, et qui se distingue donc d'une paroi longitudinale de fond qui est sensiblement parallèle à la lunette arrière. On comprend par ailleurs qu'une « lunette arrière » de hayon est une vitre arrière du véhicule, par exemple en verre. Elle est généralement transparente et peut présenter localement des parties opaques, par exemple par des zones de sérigraphie.

Selon des aspects avantageux mais non obligatoires de l'invention, le hayon peut incorporer une ou plusieurs des caractéristiques suivantes, prises seules ou en combinaison.
- L'élément structurel appartient au groupe comprenant un montant latéral et une traverse horizontale. En particulier, le caisson en matière plastique peut comprendre trois éléments structurels, à savoir deux montants latéraux reliés par une traverse horizontale inférieure.
- La garniture forme un support de l'élément électrique. Ainsi, l'élément électrique pourrait être pré-assemblé à la garniture avant que ce sous-ensemble soit fixé à l'élément structurel. Le fait que c'est la garniture, et non l'élément structurel, qui porte l'élément électrique facilite également la maintenance et le remplacement de l'élément électrique. En outre, l'intégration de l'élément électrique dans la garniture permet de mieux gérer les fonctions optionnelles d'une série de véhicule donnée sur la base d'un hayon unique. En effet, comme la garniture est une pièce rapportée, on peut prévoir de rapporter des garnitures différentes selon les options électriques que l'on veut intégrer. Or, il est plus facile de gérer la complexité en réalisant des formes différentes sur les garnitures, généralement de dimensions plus petites, que sur des doublures de forme plus grande.
- L'élément électrique est un élément optique, par exemple une source lumineuse.
- La garniture présente une partie de fixation d'une source lumineuse et une partie de fixation d'un réflecteur, ces parties de fixation étant par exemple des orifices réalisés dans des faces d'appui décalées, c'est-à-dire se trouvant à des distances par rapport à la lunette arrière qui sont différentes l'une de l'autre. La source lumineuse est par exemple sous forme d'un ensemble d'un circuit imprimé de type PCB (« printed circuit board » en anglais) et de diodes électroluminescentes (LEDs). Le réflecteur peut comprendre un ou plusieurs clips pour coopérer avec le ou les orifices de façon à être fixé sur la garniture. Par ailleurs, on peut en outre prévoir une partie de fixation d'un câble électrique dans la garniture. Ainsi, la garniture peut porter plusieurs éléments optiques.
- L'élément électrique comprend un élément du groupe constitué par une caméra, un capteur, un récepteur, une antenne. Ces éléments servent souvent pour des fonctions optionnelles dans une série de véhicule. Il est donc intéressant de les intégrer dans la garniture rapportée.
- L'élément électrique est un récepteur ou émetteur de courant, qui se distingue d'un fil ou câble électrique faisant uniquement passer du courant. Ainsi, alors qu'un fil électrique pourrait relativement aisément être logé dans une zone non sèche, en assurant une étanchéité du fil, un récepteur ou émetteur de courant, tel qu'un élément optique, une caméra, un capteur, un récepteur ou encore une antenne, requièrent d'être logés dans une zone sèche et la solution proposée ici procure un avantage particulièrement intéressant.
- L'élément structurel, assemblé avec la lunette et la garniture, présente une section transversale dont le contour extérieur a sensiblement une forme de quadrilatère, par exemple une forme trapézoïdale, un côté du quadrilatère étant formé par la lunette arrière, deux autres côtés consécutifs étant formés par le montant structurel et le dernier côté, reliant la lunette arrière et l'élément structurel, étant formé au moins partiellement par la garniture. Selon une variante, un côté du quadrilatère est formé par la lunette arrière, un côté adjacent est formé par le montant structurel, un côté opposé, adjacent à la lunette arrière, est formé par la garniture, et le dernier côté étant formé en partie par la garniture et en partie par le montant structurel.
- La garniture est montée sur le montant structurel de façon amovible, par exemple au moyen d'un rivet, de vis, d'agrafe d'un clip ou de toutes autres solutions techniques qui permettent d'avoir un démontage facile de la partie garniture. Ainsi, la garniture peut facilement être démontée de l'élément structurel pour faciliter la maintenance et le remplacement de l'élément électrique.
- La garniture comprend un bord longitudinal de liaison avec la lunette arrière, muni d'un joint souple, par exemple un joint de type lame ou de toute autre solution qui permette de réaliser une fermeture ou une étanchéité à la lumière dans le cas où l'élément électrique a une fonction éclairage. De préférence, la lunette arrière comprend une zone de sérigraphie à l'endroit de ce joint pour dissimuler la liaison avec la garniture.
- La garniture est réalisée en matière thermoplastique. Le montant structurel est réalisé en matière thermoplastique, matière thermodurcissable ou matériau composite.

L'invention sera mieux comprise à la lecture des figures annexées, qui sont fournies à titre d'exemples et ne présentent aucun caractère limitatif, dans lesquelles :
- la figure 1 est une vue en perspective schématique de l'extérieur d'un hayon de véhicule automobile selon un mode de réalisation ;
- la figure 2 est une vue en coupe transversale schématique selon le plan I-I d'un montant du hayon de la figure 1 ;
- la figure 3 est une vue partielle détachée et en perspective schématique de la garniture du montant de la figure 2 ;
- la figure 4 est une vue en coupe transversale schématique de la garniture du montant de la figure 2 ;
- la figure 5 est une vue en coupe schématique du réflecteur du montant de la figure 2;
- la figure 6 est une vue en coupe transversale schématique selon le plan II-II d'une traverse du hayon de la figure 1 ;
- la figure 7 est une vue en détail de la partie III de la figure 6.

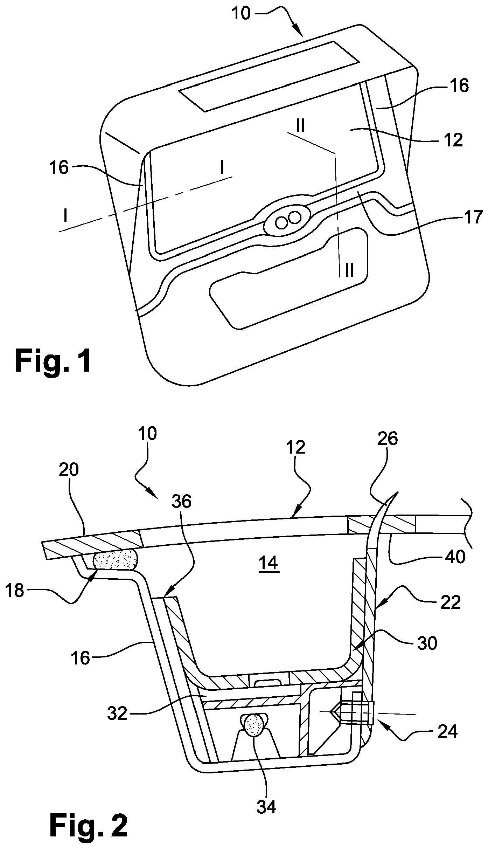

On se réfère maintenant à la figure 1. Un hayon arrière 10 de véhicule automobile comprend un caisson en matière plastique comprenant, dans cet exemple, deux montants latéraux 16 et une traverse horizontale 17 inférieure reliant les montants latéraux 16. Les montants 16 et la traverse 17 entourent et supportent une lunette arrière 12 en verre. Chaque montant 16 et la traverse 17 constituent chacun un élément structurel allongé, s'étendant chacun selon une direction longitudinale correspondant à l'axe de l'allongement de l'élément structurel. Plus précisément, la traverse 17 est allongée dans une direction sensiblement horizontale en considérant le hayon lorsqu'il est monté sur le véhicule, si bien que la direction longitudinale de la traverse 17 correspond à cette direction sensiblement horizontale. Les montants latéraux 16 sont, eux, allongés dans une direction sensiblement verticale lorsque le hayon est monté sur le véhicule, si bien que la direction longitudinale des montants latéraux 16 est la direction sensiblement verticale.

Comme on peut le voir sur la figure 2, le montant 16 présente une section transversale en « semi-U », c'est-à-dire qu'une branche latérale du U, intérieure, n'est pas complète. La paroi extérieure du montant 16 est collée à la lunette 12 par un cordon de colle 18, ce qui assure à la fois le maintien de la lunette 12 et l'étanchéité du caisson vis-à-vis de l'extérieur du véhicule. La lunette 12 présente une zone de sérigraphie 20 au droit de la bande de collage 18. On comprend ici que l'extérieur du véhicule correspond à la partie se trouvant plus éloignée du centre de la lunette arrière 12, à savoir la partie gauche de la figure 2 et que l'intérieur du véhicule correspond à la partie se trouvant plus proche du centre de la lunette arrière 12, à savoir la partie droite de la figure 2.

Le montant 16 délimite, avec la lunette arrière 12, un logement 14 comportant une ouverture intérieure qui est fermée au moyen d'une garniture 22 rapportée, de façon à former au moins partiellement une paroi longitudinale du logement, adjacente et disposée vers l'intérieur de la lunette arrière 12. La garniture 22 est montée au montant 16 de façon amovible, par exemple au moyen d'un rivet 24. Par ailleurs, la garniture 22 comprend un bord longitudinal de liaison avec la lunette 12 muni d'un joint souple 26 de type lame. La lunette 12 comprend une deuxième zone de sérigraphie 40 au droit du joint 26.

Ainsi, le montant 16, assemblé avec la lunette 12 et la garniture 22, présente une section transversale dont le contour extérieur a sensiblement une forme de quadrilatère, ici une forme trapézoïdale. Un premier côté du quadrilatère est formé par la lunette arrière 12 et deux autres côtés consécutifs, les deux côtés gauche et inférieur, sont formés par le montant 16. Le dernier côté, le côté droit reliant la lunette arrière 12 et le montant 16 est formé au moins partiellement par la garniture 22. Dans cet exemple, sensiblement tout le dernier côté, hormis la partie formant l'angle, est formé par la garniture. Le montant 16 comprend par ailleurs une nervure de calage 36 permettant de positionner des éléments décrits dans la suite.

Dans cet exemple, la garniture 22 forme un support de plusieurs éléments électriques reçus dans le logement 14. En particulier, elle porte l'ensemble d'un circuit imprimé PCB 32 muni de LEDs 33et un câble connecteur 34. La garniture 22 forme également un support pour un réflecteur 30.

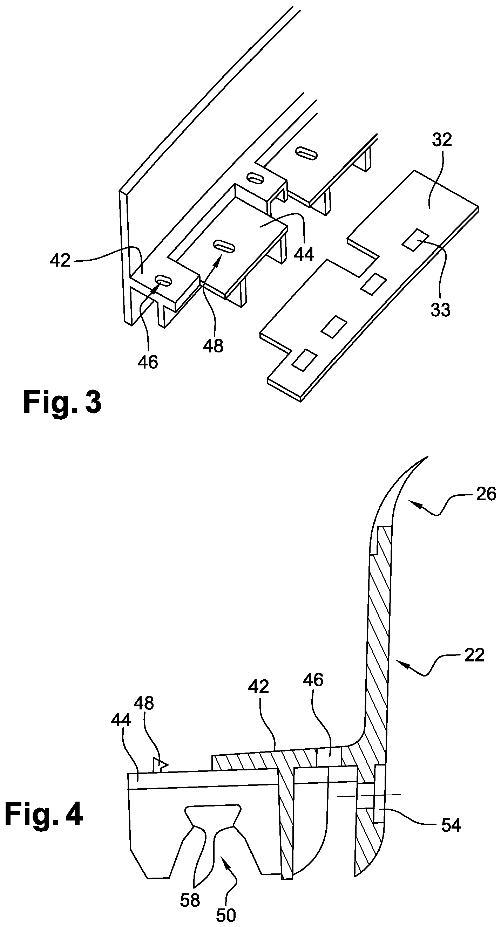

Comme on peut le voir sur la figure 3, la garniture 22 présente un premier groupe de faces d'appui 42 et un deuxième groupe de faces d'appui 44, qui sont décalés l'un par rapport à l'autre, c'est-à-dire que les faces d'appui 42 et les faces d'appui 44 se trouvent à des distances par rapport à la lunette arrière 12 différentes l'une de l'autre. Des moyens de fixation 46, 48 sont réalisés respectivement dans ces faces d'appui 42, 44 pour la fixation du réflecteur 30 et du PCB 32.

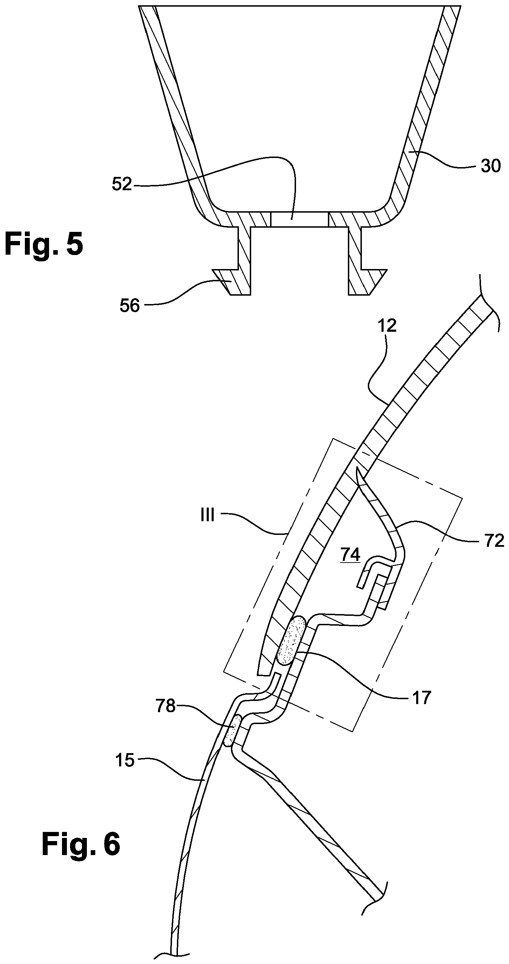

Comme illustré sur la figure 5, le réflecteur 30 présente au moins un clip 56 destiné à être inséré dans l'orifice 46 afin de fixer le réflecteur 30 à la garniture 22. De façon similaire, des clips 48 réalisés sur les faces d'appui 44 sont aptes à fixer par clipsage le circuit PCB 32.

La garniture 22 est également visible sur la figure 4. En plus des moyens de fixation des éléments optiques, la garniture comprend des moyens de fixation 50 du câble connecteur 34 sous forme d'un creux avec des pattes élastiques 58 pour pincer le câble 34. Par ailleurs, la garniture 22 comprend dans sa paroi recouvrant l'ouverture latérale un trou 54 qui permet sa fixation par le rivet 24 sur le montant 16.

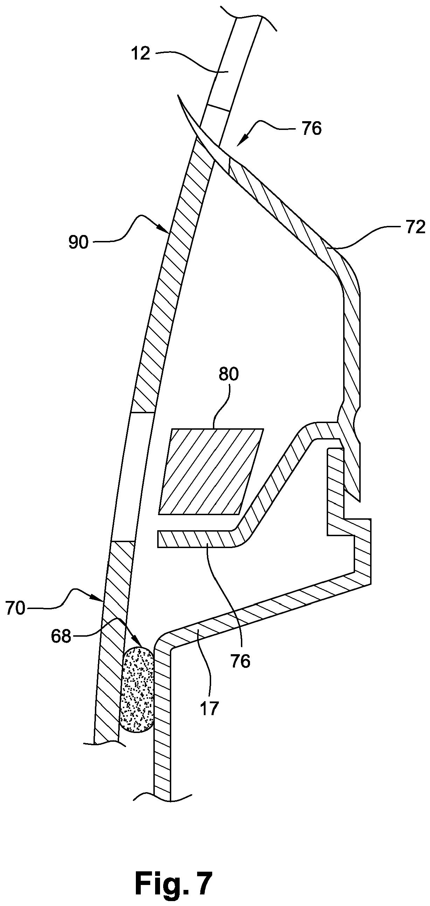

On se réfère maintenant aux figures 6 et 7 illustrant un deuxième exemple d'élément structurel.

Dans ce cas, la lunette 12 s'étend verticalement et recouvre dans sa partie inférieure la jonction d'une peau extérieure 15 du hayon 10 avec une doublure intérieure du hayon, composée par le caisson. On comprend donc que ici, la partie extérieure de la lunette 12 se trouve en parte inférieure et que la partie intérieure de la lunette, se trouvant plus proche du centre de la lunette, en partie supérieure de la figure. La peau extérieure 15 est fixée au caisson du hayon 10 au niveau de la traverse 17 par une bande de collage 78. La lunette 12 présente une zone de sérigraphie 70 au droit de la bande de collage 78. La traverse 17 fait partie du caisson du hayon et constitue un élément structurel.

La traverse 17 délimite, avec la lunette arrière 12, un logement 74 comportant une ouverture intérieure qui est fermée au moyen d'une garniture 72 rapportée de façon à former une paroi longitudinale du logement adjacente et disposée vers l'intérieur de la lunette arrière 12. Ici la traverse 17 présente localement une section en « semi-U » dans laquelle le fond du U n'est pas complet et la branche latérale intérieure du U n'existe pas.

Par ailleurs, la garniture 72 comprend un bord longitudinal de liaison avec la lunette arrière 12 muni d'un joint souple 76 de type lame. La lunette 12 comprend une deuxième zone de sérigraphie 90 au droit du joint 76.

Dans cet exemple, la garniture 72 forme un support d'un élément électrique 80, par exemple d'une caméra extérieure ou d'un éclairage. A cet effet, la garniture 72 comprend un plateau 76 sensiblement horizontal qui supporte l'élément électrique 80.

La garniture 72 est montée sur la traverse 17 de façon amovible, au moyen d'une vis.

Dans les exemples décrits, le caisson du hayon 10 est réalisé en matériau composite, tel que de la matière plastique renforcée par des fibres.

L'invention n'est pas limitée aux exemples présentés et d'autres modes de réalisation apparaîtront clairement à l'homme du métier.

En particulier, l'élément structurel peut prendre une forme générale différente. De préférence, il présente une section transversale en « semi-U », c'est-à-dire qu'au moins une branche latérale du U est absente.

## Revendications

1. Hayon (10) de véhicule automobile comprenant un caisson en matière plastique comprenant au moins un élément structurel (16, 17) de support d'une lunette arrière (12), l'élément structurel étant allongé selon une direction de dite longitudinale, **caractérisé en ce que** l'élément structurel (16, 17) délimite, avec la lunette arrière (12), un logement (14, 74) comportant une ouverture intérieure, l'ouverture intérieure étant fermée au moyen d'une garniture (22, 72) rapportée de façon à former au moins partiellement une paroi longitudinale du logement, adjacente à la lunette arrière (12) et disposée vers l'intérieur de la lunette arrière, de sorte que le logement reçoive un élément électrique (32, 33, 34, 80) du véhicule.

2. Hayon selon la revendication précédente, dans lequel l'élément structurel appartient au groupe comprenant un montant latéral (16) et une traverse horizontale (17).

3. Hayon selon l'une quelconque des revendications précédentes, dans lequel la garniture (22, 72) forme un support de l'élément électrique (32, 33, 34, 80).

4. Hayon selon l'une quelconque des revendications précédentes, dans lequel l'élément électrique (32, 33, 34, 80) est un élément optique.

5. Hayon selon la revendication précédente, dans lequel la garniture (22, 72) présente une partie de fixation d'une source lumineuse (33, 34) et une partie de fixation d'un réflecteur (30), ces parties de fixation comprenant par exemple des orifices réalisés dans des faces d'appui décalées (42, 44), c'est-à-dire se trouvant à des distances par rapport à la lunette arrière qui sont différentes l'une de l'autre.

6. Hayon selon l'une quelconque des revendications précédentes, dans lequel l'élément électrique (32, 33, 34, 80) comprend un élément du groupe constitué par une caméra, un capteur, un récepteur, un émetteur, une antenne.

7. Hayon selon l'une quelconque des revendications précédentes, dans lequel l'élément structurel (16, 17), assemblé avec la lunette (12) et la garniture (22, 72), présente une section transversale dont le contour extérieur a sensiblement une forme de quadrilatère, un côté du quadrilatère étant formé par la lunette arrière (12), deux autres côtés consécutifs étant formés par le montant structurel (16, 17) et le dernier côté, reliant la lunette arrière et l'élément structurel, étant formé au moins partiellement par la garniture (22, 72).

8. Hayon selon l'une quelconque des revendications précédentes, dans lequel la garniture (22, 72) est montée sur le montant structurel de façon amovible, par exemple au moyen d'un rivet, de vis, d'agrafe ou d'un clip.

9. Hayon selon l'une quelconque des revendications précédentes, dans lequel la garniture (22, 72) comprend un bord longitudinal de liaison avec la lunette arrière, muni d'un joint souple (26, 76), par exemple un joint de type lame.

10. Hayon selon l'une quelconque des revendications précédentes, dans lequel la garniture (22, 72) est réalisée en matière thermoplastique et/ou l'élément structurel (16, 17) est réalisé en matière thermoplastique, matière thermodurcissable ou matériau composite.

## Patentansprüche

1. Heckklappe (10) eines Kraftfahrzeugs, die einen Senkkasten aus Kunststoffmaterial umfasst, der mindestens ein Strukturträgerelement (16, 17) für eine Heckscheibe (12) umfasst, wobei das Strukturelement entlang einer Längsrichtung verlängert ist, **dadurch gekennzeichnet, dass** das Strukturelement (16, 17) mit der Heckscheibe (12) ein Gehäuse (14, 74) umgrenzt, das eine innere Öffnung umfasst, wobei die innere Öffnung mittels einer Garnitur (22, 72) geschlossen ist, die so angebracht ist, dass sie zumindest teilweise eine Längswand des Gehäuses bildet, das benachbart zur Heckscheibe (12) ist und zur Innenseite der Heckscheibe hin angeordnet ist, sodass das Gehäuse ein elektrisches Bauelement (32, 33, 34, 80) des Fahrzeugs aufnimmt.

2. Heckklappe nach dem vorhergehenden Anspruch, wobei das Strukturelement zu der Gruppe gehört, die eine seitliche Strebe (16) und eine horizontale Querstrebe (17) umfasst.

3. Heckklappe nach einem der vorhergehenden Ansprüche, wobei die Garnitur (22, 72) einen Träger des elektrischen Bauelements (32, 33, 34, 80) bildet.

4. Heckklappe nach einem der vorhergehenden Ansprüche, wobei das elektrische Bauelement (32, 33, 34, 80) ein optisches Element ist.

5. Heckklappe nach dem vorhergehenden Anspruch, wobei die Garnitur (22, 72) ein Befestigungsteil einer Lichtquelle (33, 34) und ein Befestigungsteil eines Reflektors (30) darstellt, wobei diese Befestigungsteile beispielsweise Öffnungen umfassen, die in einer versetzten Stützfläche (42, 44) ausgeführt sind, das heißt, die sich in Abständen bezüglich der Heckscheibe befinden, welche sich voneinander unterscheiden.

6. Heckklappe nach einem der vorhergehenden Ansprüche, wobei das elektrische Bauelement (32, 33, 34, 80) ein Element aus der Gruppe umfasst, die aus einer Kamera, einem Sensor, einem Empfänger, einem Sender und einer Antenne besteht.

7. Heckklappe nach einem der vorhergehenden Ansprüche, wobei das Strukturelement (16, 17), zusammengesetzt mit der Heckscheibe (12) und der Garnitur (22, 72), eine Querschnittsfläche darstellt, deren Außenkontur eine im Wesentlichen viereckige Form aufweist, wobei eine Seite des Vierecks durch die Heckscheibe (12) gebildet wird, zwei weitere aufeinander folgende Seiten durch die strukturellen Streben (16, 17) gebildet werden und die letzte Seite, die die Heckscheibe und das Strukturelement verbindet, mindestens teilweise durch die Garnitur (22, 72) gebildet wird.

8. Heckklappe nach einem der vorhergehenden Ansprüche, wobei die Garnitur (22, 72) abnehmbar auf der Strukturstrebe angebracht ist, beispielsweise mittels einer Niete, einer Schraube, einer Klammer oder einer Klemme.

9. Heckklappe nach einem der vorhergehenden Ansprüche, wobei die Garnitur (22, 72) eine Längskante in Verbindung mit der Heckscheibe umfasst, die mit einer Weichdichtung (26, 76), beispielsweise einer Zungendichtung, befestigt ist.

10. Heckklappe nach einem der vorhergehenden Ansprüche, wobei die Garnitur (22, 72) in thermoplastischem Material ausgeführt ist und/oder das Strukturelement (16, 17) in thermoplastischem Material, duroplastischem Material oder Verbundwerkstoff ausgeführt ist.

## Claims

1. Motor vehicle tailgate (10) comprising a plastic box structure comprising at least one structural element (16, 17) supporting a rear screen (12), the structural element being elongated in a "longitudinal" direction, **characterised in that** the structural element (16, 17) delimits, with the rear screen (12), a housing (14, 74) comprising an interior opening, the interior opening being closed by means of a lining (22, 72) which is attached so as to form at least partially a longitudinal wall of the housing, adjacent to the rear screen (12) and arranged towards the inside of the rear screen, in such a way that the housing houses an electrical element (32, 33, 34, 80) of the vehicle.

2. Tailgate according to the preceding claim, wherein the structural element belongs to the group comprising a lateral upright (16) and a horizontal cross member (17).

3. Tailgate according to any one of the preceding claims, wherein the lining (22, 72) forms a support for the electrical element (32, 33, 34, 80).

4. Tailgate according to any one of the preceding claims, wherein the electrical element (32, 33, 34, 80) is an optical element.

5. Tailgate according to the preceding claim, wherein the lining (22, 72) comprises an attachment part for a light source (33, 34) and an attachment part for a reflector (30), these attachment parts comprising for example holes made in offset support surfaces (42, 44), i.e. at different distances from the rear screen.

6. Tailgate according to any one of the preceding claims, wherein the electrical element (32, 33, 34, 80) comprises an element from the group consisting of a camera, a sensor, a receiver, a transmitter, an antenna.

7. Tailgate according to any one of the preceding claims, wherein the structural element (16, 17), assembled with the screen (12) and the lining (22, 72) has a cross-section whose outer contour has a substantially quadrilateral shape, one side of the quadrilateral being formed by the rear screen (12), two other consecutive sides being formed by the structural upright (16, 17) and the last side, connecting the rear screen and the structural element, being formed at least partially by the lining (22, 72).

8. Tailgate according to any one of the preceding claims, wherein the lining (22, 72) is removably mounted on the structural upright, for example by means of a rivet, screw or clip.

9. Tailgate according to any one of the preceding claims, wherein the lining (22, 72) comprises a longitudinal edge connecting with the rear screen, provided with a flexible seal (26, 76), for example a leaf type seal.

10. Tailgate according to any one of the preceding claims, wherein the lining (22, 72) is made of thermoplastic material and/or the structural element (16, 17) is made of thermoplastic material, thermosetting material or composite material.
